# EUROPÄISCHE PATENTSCHRIFT

(11) **EP 2 959 120 B1**
(45) Veröffentlichungstag und Bekanntmachung des Hinweises auf die Patenterteilung: **14.06.2017**
(21) Anmeldenummer: 14705748.3
(22) Anmeldetag: 18.02.2014
(51) Int. Cl.: F22D 1/00, F02C 6/18, F01K 23/10, F22D 1/08

(54) **KONDENSATVORWÄRMER FÜR EINEN ABHITZEDAMPFERZEUGER**
CONDENSATE PREHEATER FOR A WASTE-HEAT STEAM GENERATOR
PRÉCHAUFFEUR DE CONDENSAT POUR GÉNÉRATEUR DE VAPEUR À RÉCUPÉRATION DE CHALEUR

(30) Priorität: 13.03.2013 DE 102013204396
(43) Veröffentlichungstag der Anmeldung: 30.12.2015
(73) Patentinhaber: Siemens Aktiengesellschaft, 80333 München (DE)
(72) Erfinder: JURETZEK, Uwe, 91058 Erlangen (DE)
(86) Internationale Anmeldenummer: PCT/EP2014/053078
(87) Internationale Veröffentlichungsnummer: WO 2014/139765

(56) Entgegenhaltungen:
- EP-A2- 0 281 151
- DE-B- 1 085 890
- FR-A- 976 227
- US-A- 4 173 949
- US-B1- 6 508 206
- US-B1- 7 043 912

## Beschreibung

Die vorliegende Erfindung betrifft einen Kondensatvorwärmer für den Abhitzedampferzeuger eines Gas- und Dampfkraftwerks und bezieht sich auf die Vermeidung der Unterschreitung von Abgastaupunkten. Ein gattungsgemäßer Kondensatvorwärmer für einen Abhitzedampferzeuger ist zum Beispiel in dem Dokument EP 0281151 A2 offenbart. Die bei Gas- und Dampfkraftwerken (GUD) eingesetzten Brennstoffe weisen unter anderem mehr oder weniger hohe Schwefelgehalte auf. Zusammen mit dem bei der Verbrennung von Gas bzw. Öl entstehenden Wasseranteil besteht die Gefahr, dass sich bei Unterschreitung der entsprechenden Abgastaupunkte Schwefelsäure, schweflige Säure und Wasser im sogenannten kalten Teil des Abhitzedampferzeugers (insbesondere im Kondensatvorwärmer) niederschlagen und zu Korrosion und am Ende zu Bauteilversagen führen.

Zur Vermeidung der Unterschreitung des Abgastaupunktes und des damit verbundenen Wasser-/ Säureanfalls (insbesondere Schwefelsäure) muss die Kondensattemperatur bei einem Gas- und Dampfkraftwerk vor Eintritt des Kondensates in den Kondensatvorwärmer des Abhitzedampferzeugers auf eine entsprechende Mindesttemperatur angehoben werden. Der Grund hierfür ist, dass der Wärmeübergang von der Wasserseite her bestimmt wird, d.h. die abgasseitige Rohrwandungstemperatur entspricht ungefähr der innen anliegenden Kondensattemperatur. Die Kondensattemperatur ist wiederum durch die definierten Rückkühlbedingungen (Kühlungsart, Auslegung des Kühlsystems, Umgebungsbedingungen, etc.) gesetzt. Die Mindesteintrittstemperatur des Kondensates zur Vermeidung der Abgastaupunktunterschreitung wird bisher meist durch Rezirkulation von Heißwasser vom Kondensatvorwärmeraustritt zum Kondensatvorwärmereintritt mittels Rezirkulationspumpen bzw. Speisewasserpumpenanzapfung sichergestellt.

Eine weitere Möglichkeit besteht darin, das Kondensat durch einen externen dampf- oder wasserbeheizten Vorwärmer vor Eintritt in den Abhitzekessel zu erwärmen. Dazu kann eine externe Heißwasser- oder Dampfquelle die notwendige Wärme liefern oder es erfolgt eine Dampfbeheizung dieses Vorwärmers durch in der Dampfturbine angezapften Dampf oder die Heizdampferzeugung findet im Abhitzedampferzeuger auf einem über dem Taupunkt liegenden Temperaturniveau statt.

Eine andere kaum genutzte Möglichkeit stellt die Ausführung des Kondensatvorwärmers in (weitgehend) säurefestem Material dar.

Aufgabe der Erfindung ist es, einen Kondensatvorwärmer der eingangs genannten Art bereitzustellen, bei dem im Betrieb an den Kondensatvorwärmerheizflächen ein Abgastaupunkt nicht unterschritten wird.

Die Erfindung löst diese Aufgabe, indem sie vorsieht, dass bei einem derartigen Kondensatvorwärmer für einen Abhitzedampferzeuger, umfassend Kondensatvorwärmerheizflächen, die im Betrieb von Abgas einer Gasturbine umströmt werden, um in den Kondensatvorwärmerheizflächen strömendes Wasser zu erwärmen, ein jeweiliger Wärmedurchgangskoeffizient der Kondensatvorwärmerheizflächen so gewählt ist, dass im Betrieb eine Oberflächentemperatur der Kondensatvorwärmerheizflächen über einem Abgastaupunkt liegt. Dabei weist der Kondensatvorwärmer einen Kondensatvorwärmereintritt und einen Kondensatvorwärmeraustritt auf, und der Wärmedurchgangskoeffizient am Kondensatvorwärmereintritt ist gegenüber dem Wärmedurchgangskoeffizient am Kondensatvorwärmeraustritt verringert.

Bisher wird wie bei allen Kesselheizflächen ein möglichst guter Wärmeübergang beim Kondensatvorwärmer angestrebt, welcher es notwendig macht, die Kondensateintrittstemperatur zur Vermeidung der Taupunktsunterschreitung entsprechend zu erhöhen, da der Wärmeübergang von der Wasserseite her bestimmt wird. Im Gegensatz dazu beruht nun die Erfindung auf dem Gedanken, an den einzelnen Wärmetauscherrohren des Kondensatvorwärmers, welche wegen zu niedriger Kondensattemperatur von einer Abgastaupunktunterschreitung betroffen sein könnten, den Wärmeübergang entsprechend zu verschlechtern und zwar soweit, dass die abgasseitige Wandtemperatur des Wärmetauscherrohres gerade über den Abgastaupunkt steigt. Die Verschlechterung des Wärmeüberganges wird also nur bei Kondensatvorwärmerheizflächen angewandt, welche nur damit die minimal zulässige Rohrwandaußentemperatur erreichen. Sobald die Kondensattemperatur die Abgastaupunkttemperatur sicher erreicht (auch bei wechselnden Betriebsbedingungen), kann auf diese Maßnahme verzichtet werden.

Dadurch, dass der Wärmedurchgangskoeffizient am Kondensatvorwärmereintritt gegenüber dem Wärmedurchgangskoeffizient am Kondensatvorwärmeraustritt verringert ist, kann sichergestellt werden, dass auch nur dort, wo die Taupunkttemperatur sonst unterschritten würde, eine Verschlechterung des Wärmeübergangs bewirkt wird und an den übrigen Stellen der üblicherweise gewünschte höchste Wärmeübergang weiterhin im Sinne einer möglichst kleinen Gesamtheizfläche des Abhitzdampferzeugers besteht.

Zweckmäßiger Weise betrifft diese Maßnahme den Wasserdampftaupunkt, welcher auch bei praktisch schwefelfreien Brenngasen von Interesse ist und etwa im Temperaturbereich von 50 bis 65 °C liegt. Er hängt von der Wasserstoffmenge im Brenngas ab und erhöht sich mit zunehmender Brenngas- und Verbrennungsluftfeuchte. Wird der Taupunkt unterschritten, kann es an den Heizflächen beim Wasserdampftaupunkt durch die Anwesenheit des Kohlendioxids zu Korrosion kommen.

Vor allem aber ist es zweckmäßig, wenn der Abgastaupunkt, der nicht unterschritten ist, ein Schwefelsäuretaupunkt ist. Der im Vergleich zum Wasserdampftaupunkt höhere Taupunkt verdünnter Schwefelsäure liegt im Temperaturbereich zwischen 90 und 160 °C und steigt mit dem Schwefelgehalt des Brennstoffs.

In einer vorteilhaften Ausführungsform ist eine Wärmedämmschicht auf mindestens einen dem Kondensatvorwärmereintritt am nächsten liegenden kondensatführenden Teil der Kondensatvorwärmerheizflächen aufgebracht. Diese Lösung ist einfach und platzsparend.

In einer weiteren vorteilhaften Ausführungsform ist mindestens eine dem Kondensatvorwärmereintritt am nächsten liegende Kondensatvorwärmerheizfläche eine Rohr-in-Rohr-Konstruktion, beispielsweise aus C-Stahl, bei der eine Wärmedämmschicht in einem Rohrzwischenraum angeordnet ist. Dabei ist es zweckmäßig, weil einfach und kostengünstig, wenn die Wärmedämmschicht Sand, insbesondere trockenen Sand, umfasst. Das äußere drucklose Rohr wird dabei wie bisher mit entsprechenden Rippen zur Oberflächenvergrößerung ausgeführt, die Wärmedämmschicht und ggf. der Durchmesser des äußeren Rohres werden je nach bereits erreichter äußerer Wandtemperatur des Innenrohres entsprechend optimiert. Das Innenrohr wird entsprechend zulässiger Druckverluste, Designdruck, etc. wie bisher ausgelegt.

Der durch die Erfindung - Verschlechterung des Wärmeüberganges durch eine zusätzliche Wärmedämmschicht - mögliche Verzicht auf diese Eintrittstemperaturerhöhung ermöglicht es, auf Kondensatrezirkulationspumpen, Speisewasserpumpenanzapfungen, externe Wärmetauscher und zugehörige Rohrleitungen und Ventile zu verzichten und den damit zusammenhängenden Invest, Platzbedarf, elektrischen Eigenbedarf, etc. einzusparen.

Weiterhin erlaubt es die Erfindung, die nominale Kesselheizfläche im Kondensatvorwärmer gegenüber einer Lösung mit Kondensatrezirkulation um mehr als 25% zu verkleinern, da der verringerte Kondensatmassenstrom im Kondensatvorwärmer den Einfluss des niedrigeren Wärmeübergangskoeffizienten überkompensiert. Der Einsatz an Rohrstahl würde sich bei Einsatz der zuvor beispielhaft genannten Rohr-in-Rohr-Konstruktion dabei insgesamt leicht erhöhen, andererseits wird die Außenhülle des Abhitzedampferzeugers etwas kleiner und es entfallen Sammler. Somit ist von ungefähr gleichem Invest auszugehen. Als Nutzen bleibt in jedem Fall ein verringerter Flächenbedarf des Abhitzedampferzeugers stehen, genauso wie eine verringerte Pumpenleistung für die Kondensatpumpe (wegen geringerer Druckverluste) mit entsprechender Verringerung des zugehörigen Eigenbedarfes.

Ferner wird die Anlagenverfügbarkeit erhöht, da aktive Komponenten wie Pumpen und Ventile durch eine passive Wärmedämmschicht ersetzt werden. Der Verzicht auf die Eintrittstemperaturerhöhung des Kondensates kann so weit gehen, wie sichergestellt ist, dass die Taupunkttemperatur des Abgases natürlich insgesamt nicht unterschritten wird (d.h., dass die im Abgas zur Verfügung stehende Wärmemenge zur Kondensatvorwärmung insgesamt ausreicht).

Gegenüber der Ausführung des Kondensatvorwärmers in (weitgehend) säurefestem Material (z.B. Edelstahl) ist die vorgeschlagene Lösung wegen der geringeren Material- und Fertigungskosten deutlich kostengünstiger.

Die Erfindung wird beispielhaft anhand der Zeichnungen näher erläutert. Es zeigen schematisch und nicht maßstäblich:
- Figur 1: eine Ansicht eines bekannten Kondensatvorwärmers mit Speisewasserentnahme,
- Figur 2: eine Teilansicht eines weiteren bekannten Kondensatvorwärmers mit zusätzlicher Kondensatrezirkulationspumpe,
- Figur 3: eine Ansicht einer Ausführungsform eines Kondensatvorwärmers nach der Erfindung und
- Figur 4: eine Rohr-in-Rohr-Konstruktion für den Kondensatvorwärmer nach der Erfindung.

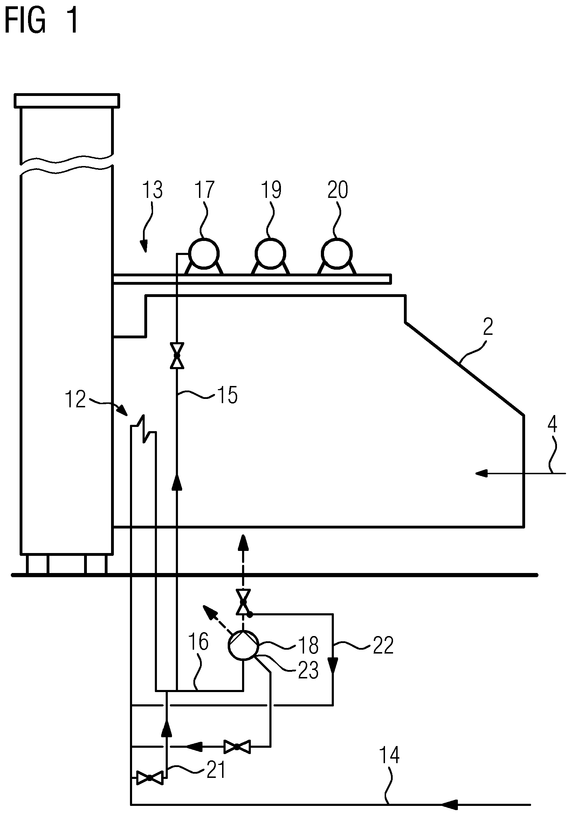

Die Figur 1 zeigt schematisch und beispielhaft die Ansicht eines bekannten Kondensatvorwärmers 12 im sogenannten kalten Teil 13 des Abhitzedampferzeugers 2 mit Speisewasserentnahme. Kondensat wird über die Kondensatleitung 14 dem Kondensatvorwärmer 12 zugeführt und dort im Wärmetausch mit dem den Abhitzedampferzeuger 2 durchströmenden Abgas 4 erwärmt. Die Kondensatleitung 14 verzweigt sich in die Leitungen 15 und 16. Die Leitung 15 leitet das Kondensat zur Niederdrucktrommel 17. Das in die Leitung 16 abgezweigte Kondensat wird über eine Speisewasserpumpe 18 den Mittel- 19 und Hochdrucktrommeln 20 zugeführt.

Die Figur 1 zeigt ferner eine kalte Umführung (cold bypass) des Kondensatvorwärmers über eine Nebenleitung 21 sowie eine Leitung 22 für einen minimalen Rückfluss des Speisewassers in die Kondensatleitung 14, weil die Speisewasserpumpe 18 im Dauerbetrieb ist und auch wenn Mittel- 19 und Hochdrucktrommel 20 nicht mit Speisewasser versorgt werden sollen, ein geringer Durchfluss an Speisewasser durch die Speisewasserpumpe 18 gewährleistet werden muss.

Die Mindesteintrittstemperatur des Kondensates zur Vermeidung der Abgastaupunktunterschreitung wird, wie in Figur 1 gezeigt, bisher meist durch Rezirkulation von Speisewasser aus einer Speisewasserpumpenanzapfung 23 sichergestellt. Mit diesem vergleichsweise wenige Komponenten umfassenden, eine geringe Komplexität aufweisenden und daher auch kostengünstigen System kann typischer Weise eine Kondensatvorwärmereinlasstemperatur von ca. 55°C sichergestellt werden. Diese Temperatur wäre zur Vermeidung der Unterschreitung des Wasserdampftaupunkts in der Regel ausreichend.

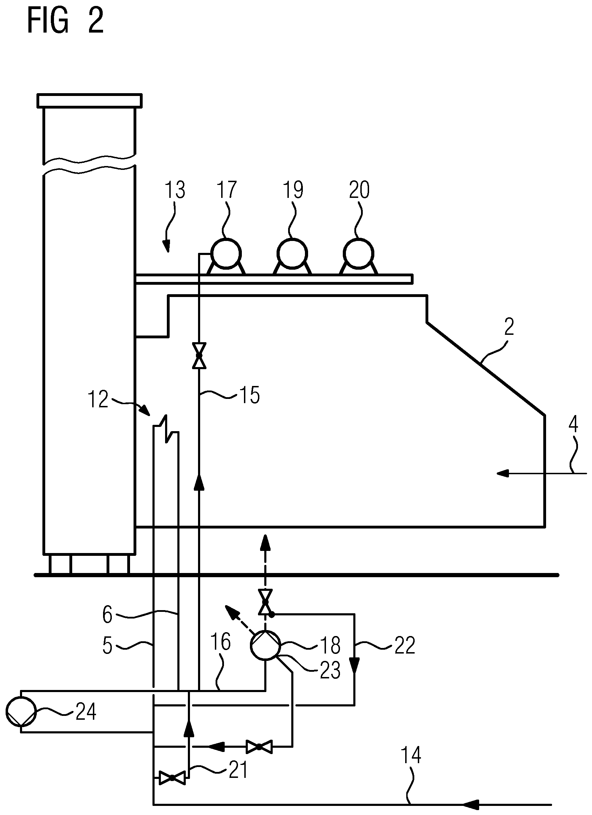

Im Hinblick auf die Vermeidung der Unterschreitung des Schwefelsäuretaupunkts kann zusätzlich, wie Figur 2 zeigt, Heißwasser vom Kondensatvorwärmeraustritt 6 zum Kondensatvorwärmereintritt 5 rückgeführt werden. Allerdings wird hierbei zusätzlich zur Speisewasserpumpe 18 der Figur 1 eine Rezirkulationspumpe 24 benötigt.

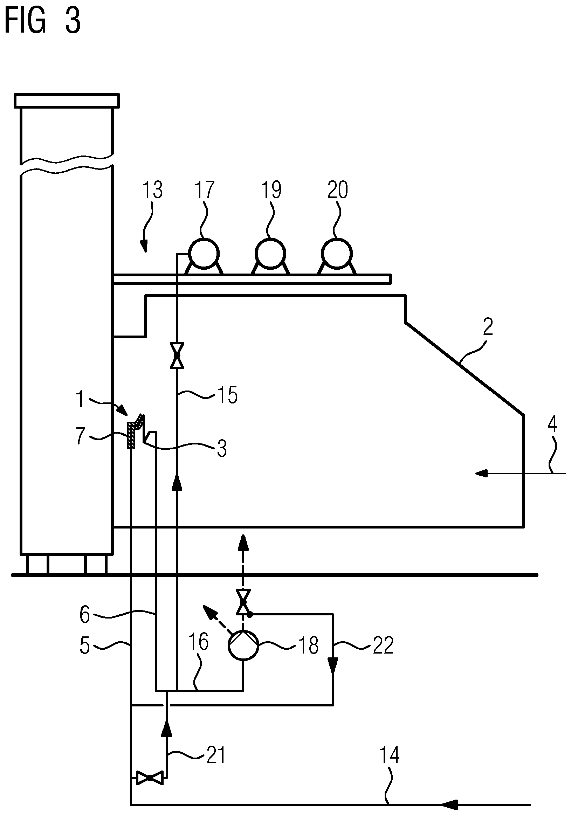

Figur 3 ist eine schematische Ansicht und zeigt eine Ausführungsform des Kondensatvorwärmers 1 nach der vorliegenden Erfindung. Speisewasserrückführung und Kondensatrezirkulation wie in den Figuren 1 und 2 gezeigt können entfallen. Stattdessen ist der Wärmedurchgangskoeffizient der Kondensatvorwärmerheizflächen 3 so gewählt, dass im Betrieb eine Oberflächentemperatur der Kondensatvorwärmerheizflächen 3 über einem Abgastaupunkt, d.h. über dem Wasserdampftaupunkt oder sogar über dem Schwefelsäuretaupunkt liegt. Erreicht wird dies dadurch, dass der Wärmedurchgangskoeffizient am Kondensatvorwärmereintritt 5 gegenüber dem Wärmedurchgangskoeffizient am Kondensatvorwärmeraustritt 6 verringert ist, indem eine Wärmedämmschicht 7 auf mindestens einen dem Kondensatvorwärmereintritt 5 am nächsten liegenden kondensatführenden Teil der Kondensatvorwärmerheizflächen 3 aufgebracht ist.

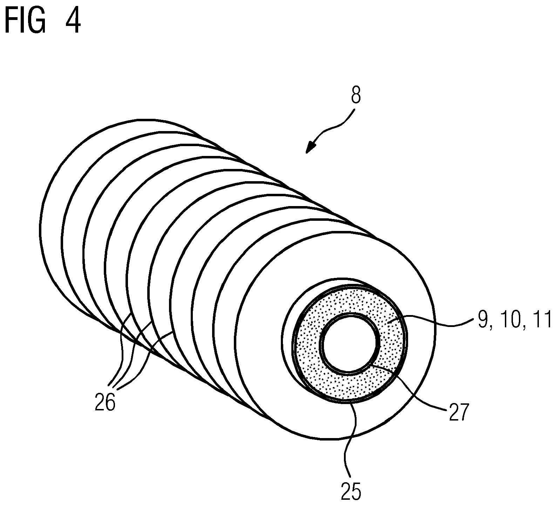

Figur 4 zeigt eine Rohr-in-Rohr-Konstruktion 8 nach der Erfindung, wie sie bei mindestens einer dem Kondensatvorwärmereintritt 5 am nächsten liegenden Kondensatvorwärmerheizfläche 3 zum Einsatz kommen kann. Bei der beispielsweise aus C-Stahl gefertigten Rohr-in-Rohr-Konstruktion 8 ist die Wärmedämmschicht 9, z.B. trockener Sand 11, in einem Rohrzwischenraum 10 angeordnet. Das äußere drucklose Rohr 25 wird dabei wie bisher mit entsprechenden Rippen 26 zur Oberflächenvergrößerung ausgeführt, die Wärmedämmschicht 9 und ggf. der Durchmesser des äußeren Rohres 25 werden je nach bereits erreichter äußerer Wandtemperatur des Innenrohres 27 entsprechend optimiert. Das Innenrohr 27 wird entsprechend zulässiger Druckverluste, Designdruck, etc. wie bisher ausgelegt.

## Patentansprüche

1. Kondensatvorwärmer (1) für einen Abhitzedampferzeuger (2), umfassend Kondensatvorwärmerheizflächen (3), die im Betrieb von Abgas (4) einer Gasturbine umströmt werden, um in den Kondensatvorwärmerheizflächen (3) strömendes Wasser zu erwärmen, wobei ein jeweiliger Wärmedurchgangskoeffizient der Kondensatvorwärmerheizflächen (3) so gewählt ist, dass im Betrieb eine Oberflächentemperatur der Kondensatvorwärmerheizflächen (3) über einem Abgastaupunkt liegt, **dadurch gekennzeichnet, dass** der Kondensatvorwärmer (1) einen Kondensatvorwärmereintritt (5) und einen Kondensatvorwärmeraustritt (6) aufweist und der Wärmedurchgangskoeffizient am Kondensatvorwärmereintritt (5) gegenüber dem Wärmedurchgangskoeffizient am Kondensatvorwärmeraustritt (6) verringert ist.

2. Kondensatvorwärmer (1) nach Anspruch 1, wobei der Abgastaupunkt ein Wasserdampftaupunkt ist.

3. Kondensatvorwärmer (1) nach Anspruch 1, wobei der Abgastaupunkt ein Schwefelsäuretaupunkt ist.

4. Kondensatvorwärmer (1) nach einem der Ansprüche 1 bis 3, wobei eine Wärmedämmschicht (7) auf mindestens einen dem Kondensatvorwärmereintritt (5) am nächsten liegenden kondensatführenden Teil der Kondensatvorwärmerheizflächen (3) aufgebracht ist.

5. Kondensatvorwärmer (1) nach einem der Ansprüche 1 bis 3, wobei mindestens eine dem Kondensatvorwärmereintritt (5) am nächsten liegende Kondensatvorwärmerheizfläche (3) eine Rohr-in-Rohr-Konstruktion (8) ist, bei der eine Wärmedämmschicht (9) in einem Rohrzwischenraum (10) angeordnet ist.

6. Kondensatvorwärmer (1) nach Anspruch 5, wobei die Wärmedämmschicht (9) Sand (11) umfasst.

## Claims

1. Condensate preheater (1) for a waste heat steam generator (2), comprising condensate preheater heating surfaces (3) around which exhaust gas (4) from a gas turbine flows during operation in order to heat the water flowing into the condensate preheater heating surfaces (3), wherein a respective heat transfer coefficient of the condensate preheater heating surfaces (3) is selected such that in operation, a surface temperature of the condensate preheater heating surfaces (3) lies above an exhaust gas dew point, **characterized in that** the condensate preheater (1) has a condensate preheater inlet (5) and a condensate preheater outlet (6), and the heat transfer coefficient at the condensate preheater inlet (5) is reduced compared with the heat transfer coefficient at the condensate preheater outlet (6).

2. Condensate preheater (1) according to Claim 1, wherein the exhaust gas dew point is a water vapour dew point.

3. Condensate preheater (1) according to Claim 1, wherein the exhaust gas dew point is a sulphuric acid dew point.

4. Condensate preheater (1) according to any of Claims 1 to 3, wherein a heat-insulating layer (7) is applied to at least one condensate-carrying part of the condensate preheater heating surfaces (3) lying closest to the condensate preheater inlet (5).

5. Condensate preheater (1) according to any of Claims 1 to 3, wherein at least one condensate preheater heating surface (3) lying closest to the condensate preheater inlet (5) is a pipe-in-pipe construction (8) in which a heat-insulating layer (9) is arranged in an inter-pipe space (10).

6. Condensate preheater (1) according to Claim 5, wherein the heat-insulating layer (9) comprises sand (11).

## Revendications

1. Préchauffeur (1) de condensat pour un générateur (2) de vapeur à récupération de la chaleur perdue, comprenant des surfaces (3) de chauffe de préchauffeur de condensat, sur lesquelles des gaz (4) d'échappement d'une turbine à gaz passent en fonctionnement, pour réchauffer de l'eau passant dans les surfaces (3) de chauffe du préchauffeur de condensat, un coefficient de transmission de la chaleur des surfaces (3) de chauffe du préchauffeur de condensat étant choisi de manière à avoir en fonctionnement une température de surface des surfaces (3) de chauffe du préchauffeur de condensat au dessus d'un point de rosée des gaz d'échappement, **caractérisé en ce que** le préchauffeur (1) de condensat a une entrée (5) et une sortie (6) et le coefficient de transmission de la chaleur à l'entrée (5) du préchauffeur de condensat est diminué par rapport au coefficient de transmission de la chaleur à la sortie (6) du préchauffeur de condensat.

2. Préchauffeur (1) de condensat suivant la revendication 1, dans lequel le point de rosée des gaz d'échappement est un point de rosée de la vapeur d'eau.

3. Préchauffeur (1) de condensat suivant la revendication 1, dans lequel le point de rosée des gaz d'échappement est un point de rosée de l'acide sulfurique.

4. Préchauffeur (1) de condensat suivant l'une des revendications 1 à 3, dans lequel une couche (7) calorifuge est déposée sur au moins une partie des surfaces (3) de chauffe du préchauffeur de condensat, conduisant le condensat et se trouvant le plus près de l'entrée (5) du préchauffeur de condensat.

5. Préchauffeur (1) de condensat suivant l'une des revendications 1 à 3, dans lequel au moins une surface (3) de chauffe du préchauffeur de condensat, se trouvant le plus près de l'entrée (5) du préchauffeur de condensat, est une construction (8) tuyau dans tuyau dans laquelle une couche (9) calorifuge est disposée dans un espace (10) intermédiaire de tuyau.

6. Préchauffeur (1) de condensat suivant la revendication 5, dans lequel la couche (9) calorifuge comprend du sable (11).
